Europäisches Patentamt

European Patent Office

Office européen des brevets

(11) Publication number: **0 049 614**

**A1**

# (12) EUROPEAN PATENT APPLICATION

(21) Application number: **81304564.8**

(22) Date of filing: **02.10.81**

(51) Int. Cl.³: **B 60 R 19/08**

(30) Priority: **06.10.80 JP 138738/80**

(43) Date of publication of application:
**14.04.82 Bulletin 82/15**

(84) Designated Contracting States:
**DE FR GB**

(71) Applicant: **NISSAN MOTOR COMPANY, LIMITED
No.2, Takara-cho, Kanagawa-ku
Yokohama City(JP)**

(72) Inventor: **Kikuchi, Hiroto
5-9, Fujimino 1-Chome
Hiratsuka City(JP)**

(72) Inventor: **Miura, Toshikatsu
3-10-307, Takiyama 6-Chome
Higashi-kurume City Tokyo(JP)**

(72) Inventor: **Okuda, Yukio
860-1, Kihei-Cho
Kodaira City, Tokyo(JP)**

(74) Representative: **Freed, Arthur Woolf et al,
MARKS & CLERK 57-60 Lincoln's Inn Fields
London WC2A 3LS(GB)**

(54) **Shock absorbing bumper.**

(57) A shock absorbing bumper comprises a shock absorbing body (2) made of a material such as foamed polyurethane which is susceptible to water to lose its shock absorbing capacity or foamed polystyrene which melts when subjected to petrol, and a protective film (11) made of a water or petrol impermeable material, thereby eliminating decrease in energy absorption of the shock absorbing body (2) or avoiding melting of the body (2) by petrol.

FIG.5

- 1 -

## SHOCK ABSORBING BUMPER

This invention relates to a shock absorbing bumper and more particularly to an improvement in a shock absorbing bumper having a shock absorbing body formed of a resin or rubber arranged on the front surface of a rigid metal member of the bumper to absorb an impact energy on collision by deformation of the shock absorbing body.

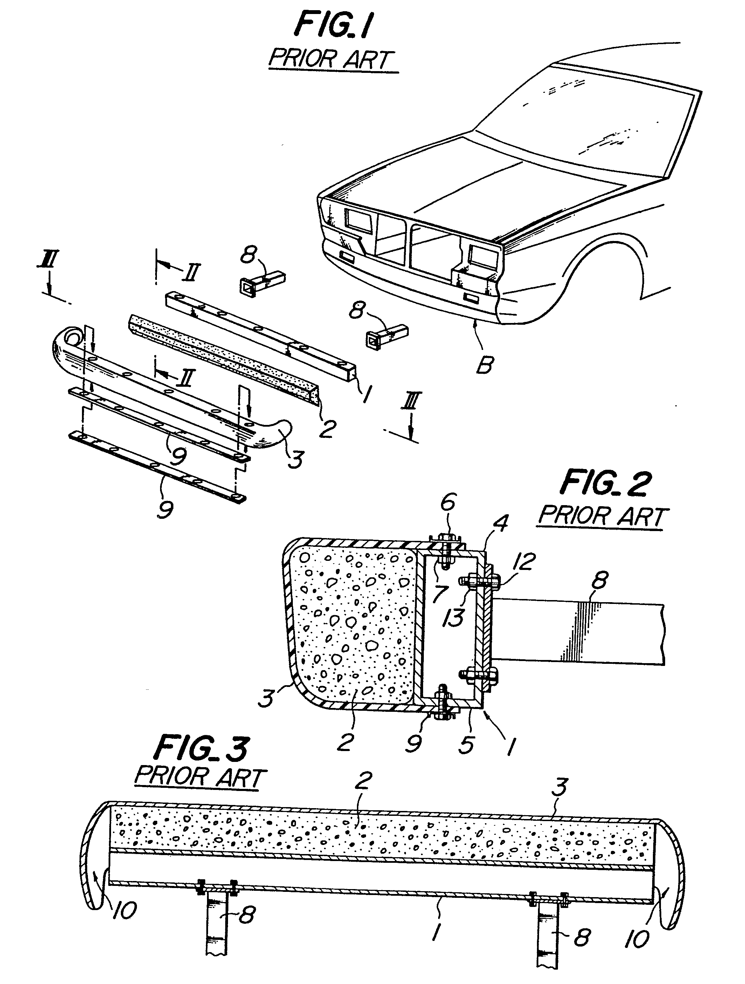

A hitherto used shock absorbing bumper of this type is shown in Figs. 1 and 2. A member 1 is made of a rigid metal formed in a closed cross-section. On its front surface is a shock absorbing body 2 formed of foamed polyurethane, foamed polystyrene or the like. A bumper cover 3 of a resin or rubber deformable in response to deformation of the shock absorbing body 2 is fixed to an upper and a lower wall 4 and 5 of the rigid member 1 by means of bolts 6 and nuts 7 or the like in a manner covering the shock absorbing body 2. The thus assembled bumper is fixed to a vehicle body B by stays 8 bolted as shown at 12 to a rear face of the rigid member 1. Retainers 9 protect the bumper cover 3 at the upper and lower walls 4 and 5 of the rigid member 1.

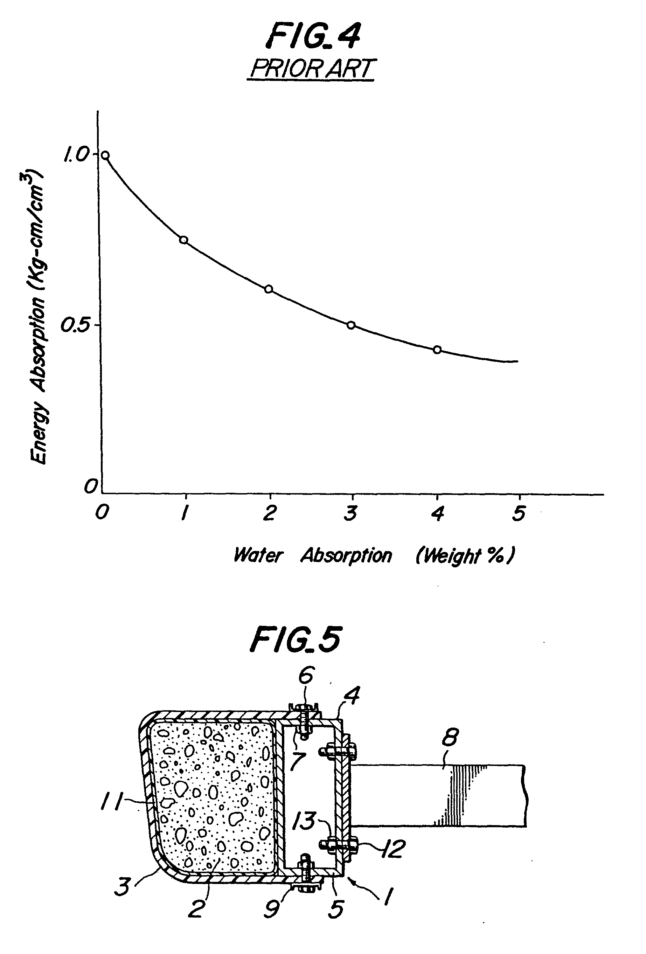

With such a hitherto used shock absorbing bumper, however, the ends of the cover 3 are not fixed to the ends of the rigid member 1 in view of changes in dimension due to thermal expansion, so that the ends of the cover 3 and rigid member 1 unavoidably form clearances 10 therebetween, as shown in Fig. 3, which make it difficult to seal the shock absorbing body 2 by the bumper cover 3. As the result, in washing a car or in the rain, water enters mainly through the clearances 10 the inside of the bumper cover 3 and penetrates into the shock absorbing body 2. In the event that petrol overflows the filler neck of the storage tank when in refueling, the petrol enters inside of the bumper cover 3 through the clearances and unavoidably settles on the shock absorbing body 2. Under these circumstances, the shock absorbing body 2, which is formed of a foamed polyurethane, progressively decreases the shock absorption as the amount of water absorption increases as can be seen from the characteristic curve shown in Fig. 4. In case of the shock absorbing body 2 formed of a foamed polystyrene, the shock absorbing body 2 melts by the action of the penetrating petrol. In Fig. 4, the abscissa indicates the amount of water absorption (weight %) in the shock absorbing body 2, and the ordinate shows the energy absorption per unit volume of the shock absorbing body 2 ($kg-cm/cm^3$).

It is therefore an object of this invention to provide an improved shock absorbing bumper which eliminates all the disadvantages of the prior art.

It is a particular object of this invention to provide a shock absorbing bumper comprising a shock absorbing body covered with a protective film for preventing liquid from entering the body, thereby eliminating decrease in energy absorption of the shock absorbing body due to its water absorption and avoiding melting of the shock absorbing body by petrol and the like.

In the accompanying drawings:-

Fig. 1 is an exploded perspective view of one example of a known shock absorbing bumper as referred to above;

Fig. 2 is a sectional view taken along the line II-II in Fig. 1 illustrating the mounting of the shock absorbing bumper shown in Fig. 1;

Fig. 3 is a sectional view taken along the line III-III in Fig. 1 illustrating the relationship between the ends of a bumper cover and a rigid member of the bumper;

Fig. 4 is a graph showing the relationship between water absorption and impact energy absorption of a shock absorbing body of foamed polyurethane; and

Fig. 5 is a sectional view of one embodiment of a shock absorbing bumper according to the present invention, corresponding to the sectional view taken along the line II-II in Fig. 1.

Referring to Fig. 5, a shock absorbing bumper essentially includes, as in the above prior art, a rigid member 1, a shock absorbing body 2 formed of foamed polyurethane arranged on the front surface of the rigid member 1 and a bumper cover 3 formed of a synthetic resin such as polypropylene secured to an upper and a lower wall 4 and 5 of the rigid member 1 by means of bolts 6 and nuts 7 or the like in a manner covering the shock absorbing body 2. Different from the prior art, the shock absorbing body 2 is covered with a protective film 11 for preventing water from entering the shock absorbing body 2.

In this embodiment, the protective film 11 is in the form of a film in close contact with the shock absorbing body 2 and of a material superior in water impermeability, but having a low water absorption, for example, a fluorine plastic such as Teflon, and polyethylene, polypropylene and the like as shown in Table 1.

## Table 1

| Material of protective film | | Water absorption (weight %) | Water permeability $(mg/100in^2/24hr)$ | Aptitude for water | Aptitude for gasoline |
|---|---|---|---|---|---|
| Fluorine resin (Teflon or the like) | | less than 0.01 | 0.4 | best | best |
| Polyethylene | | less than 0.01 | 0.7 | best | best |
| Polypropylene | | less than 0.005 | 0.7 | best | best |
| Polyamide resin | (Nylon 11) | 0.27 | 0.32 - 0.85 | best | best |
| | (Nylon 12) | 0.25 | 0.07 | | |
| Vinylidene chloride resin | | - | 0.2 - 0.6 | best | good |
| Polyester | | less than 0.8 | 1.0 - 1.3 | good | best |
| Vinyl chloride resin | | - | 4.0 | good | good |
| Polyamide resin | (Nylon 6) | 9.5 | 16 - 22 | no good | best |
| | (Nylon 66) | 8.5 | 3 - 6 | | |

- 6 -

In Table 1, the water absorption in a rate of water absorption of a unit sheet (weight %) and the water permeability is indicated by an amount of water passing through a unit sheet of 100 square inch for 24 hours.

According to the shock absorbing bumper of this embodiment, therefore, even if the water enters the interior of the bumper cover 3 through clearances formed between the ends of the rigid member 1 and the ends of the bumper cover 3, the water could not penetrate into the shock absorbing body 2 because it is covered with the protective film 11 superior in water impermeability, thereby preventing the decrease in shock absorption of the shock absorbing body 2 due to its water absorption.

Although, the protective film is in the form of a film, it is not necessarily limited to this form. It may be formed by coating on the shock absorbing body 2 by, for example, epoxy resin, liquid rubber and the like superior in water impermeability other than those shown in Table 1.

As above mentioned, the polyurethane as a shock absorbing body is susceptible to moisture. The same holds true in case of foamed vinyl chloride, acrylic foam, foamed polyethylene and sponge rubber.

With the embodiment shown in Fig. 5, when the shock absorbing body 2 is formed by foamed polystyrene which melts when subjected to petrol, the shock absorbing body 2 is covered with a protective film 11 of a material superior in petrol impermeability, for example, polyethylene, polypropylene or the like as shown in Table 1. In this case, the protective film 11 covering the shock absorbing body formed by the foamed polystyrene serves not only to prevent the petrol from contacting the the shock absorbing body 2 but also preventing direct contact between the shock absorbing body 2 and the bumper cover 3 and the rigid member 1 to restrain frictional noise due to the direct contact therebetween.

As above described, the foamed polystyrene is susceptible to petrol. The same holds true in the case of foamed vinyl chloride, acrylic foam and sponge rubber.

As can be seen from the above description, the shock absorbing bumper according to the invention comprises a protective film covering a shock absorbing body for preventing any liquid from entering the shock absorbing body, so that the decrease in shock absorption of the body due to moisture is prevented, and the melting of the body by petrol is also prevented, thereby improving the durability of the shock absorbing body.

CLAIMS

1.  A shock absorbing bumper including a rigid member (1),
a shock absorbing body (2) of a resin or rubber on the
front surface of said rigid member, and a bumper cover (3)
deformable in response to deformation of the shock
absorbing body and fixed to said rigid member in a
manner covering said shock absorbing body, characterised
in that a protective film (11) covers said shock absorbing
body (2) to prevent liquid from entering the shock
absorbing body.

2.  A shock absorbing bumper as claimed in claim 1,
characterised in that said shock absorbing body (2)
is made of a material selected from a group consisting
of foamed polyurethane, foamed vinyl chloride, acrylic
foam, foamed polyethylene and sponge rubber and said
protective film (11) is made of a water impermeable
material.

3.  A shock absorbing bumper as claimed in claim 1,
characterised in that said shock absorbing body (2)
is made of a material selected from a group consisting
of foamed polystyrene, foamed vinyl chloride, acrylic
foam and sponge rubber and said protective film (11)
is made of a material impermeable to petrol.

**FIG.1**
PRIOR ART

**FIG.2**
PRIOR ART

**FIG.3**
PRIOR ART

# FIG. 4
## PRIOR ART

# FIG. 5

European Patent
Office

**EUROPEAN SEARCH REPORT**

Application number

EP 81 30 4564.8

| Category | Citation of document with indication, where appropriate, of relevant passages | Relevant to claim |
|---|---|---|
| | DE - A1 - 2 559 529 (McCORD) <br> * page 4, lines 5 to 16 * <br> & GB - A - 1 500 976 <br> -- | 1,2 |
| A | GB - A - 2 033 535 (NISSAN MOTOR) <br> ---- | |

**DOCUMENTS CONSIDERED TO·BE RELEVANT**

**CLASSIFICATION OF THE APPLICATION (Int. Cl ³)**

B 60 R 19/08

**TECHNICAL FIELDS SEARCHED (Int. Cl.³)**

B 60 R 19/00

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 09-12-1981 | BECKER |

EPO Form 1503.1 06.78